# EUROPÄISCHE PATENTSCHRIFT

(11) **EP 2 726 720 B1**
(45) Veröffentlichungstag und Bekanntmachung des Hinweises auf die Patenterteilung: **20.04.2016**
(21) Anmeldenummer: 12725405.0
(22) Anmeldetag: 01.06.2012
(51) Int. Cl.: B29C 45/16, F02D 9/10, F16K 27/02

(54) **VERFAHREN ZUM SPALTLOSEN MONTAGESPRITZEN ZWEIER KOMPONENTEN SOWIE KLAPPENVORRICHTUNG FÜR EINE VERBRENNUNGSKRAFTMASCHINE**
METHOD FOR THE GAPLESS INJECTION MOLDING OF TWO COMPONENTS AND FLAP DEVICE FOR AN INTERNAL COMBUSTION ENGINE
PROCÉDÉ D'ASSEMBLAGE PAR MOULAGE PAR INJECTION, SANS FENTE DE DEUX ÉLÉMENTS AINSI QUE DISPOSITIF DE CLAPET DESTINÉ À UN MOTEUR À COMBUSTION INTERNE

(30) Priorität: 30.06.2011 DE 102011107608
(43) Veröffentlichungstag der Anmeldung: 07.05.2014
(73) Patentinhaber: Pierburg GmbH, 41460 Neuss (DE)
(72) Erfinder: SCHWANDER, Thomas, 41460 Neuss (DE); JANSEN, Bernd, 41844 Wegberg (DE)
(74) Vertreter: Patentanwälte ter Smitten Eberlein Rütten Partnerschaftsgesellschaft
(86) Internationale Anmeldenummer: PCT/EP2012/060374
(87) Internationale Veröffentlichungsnummer: WO 2013/000661

(56) Entgegenhaltungen:
- WO-A1-2005/070646
- FR-A1- 2 762 887
- JP-A- 2005 337 198

## Beschreibung

Die Erfindung betrifft ein Verfahren zum spaltlosen Montagespritzen zweier Komponenten sowie eine Klappenvorrichtung für eine Verbrennungskraftmaschine mit einer ersten Komponente, welche als Kanal bildendes Gehäuse dient, in welcher eine als zweite Komponente dienende Klappe drehbar gelagert ist, wobei das Gehäuse eine Ventilsitzfläche aufweist, die durch eine Vorderseite einer Wand gebildet ist, an deren Rückseite ein Freiraum ausgebildet ist und gegen die die Klappe in dem den Kanal verschließenden Zustand anliegt,

Das Montagespritzverfahren ist bekannt und wird insbesondere zur Herstellung von in Kanal bildenden Gehäusen angeordneten Kunststoffklappen in Ansaugsystemen von Verbrennungskraftmaschinen genutzt. Dabei wird in einem ersten Schritt das den Kanal bildendende Gehäuse durch Spritzen hergestellt, wobei im Gehäuse Öffnungen ausgebildet sind, welche als Lagerstellen für die im Folgenden Verfahrensschritt mit dem Klappenkörper einstückig hergestellte Klappenwelle dienen. Dabei dienen die Öffnungen als Form beim Einspritzen der Welle. Dies bedeutet selbstverständlich, dass der Schmelzpunkt der ersten Komponente höher ist als der Schmelzpunkt der zweiten Komponente. Auf ein zusätzliches Lager kann verzichtet werden, da durch das Abkühlen der zweiten Komponente diese schrumpft und somit beweglich in der Öffnung angeordnet ist.

Dies bedeutet jedoch andererseits, dass auch eine Innenwand des außen liegenden Gehäuses für den Klappenkörper als Form beim Einspritzen dient. Beim Abkühlvorgang schrumpft auch dieser Klappenkörper, so dass der Klappenkörper im geschlossenen Zustand nicht gegen die Innenwand anliegt, sondern von dieser beabstandet ist. Somit kann kein dichter Verschluss zwischen Klappenkörper und Ventilsitzfläche bei im Montagespritzverfahren hergestellten Klappen erzielt werden, wie er in vielen Anwendungen im Verbrennungsmotor erwünscht ist.

So wird in der DE 10 2005 023 613 B3 eine durch Montagespritzen hergestellte Klappe offenbart, bei der ein Verzug des umgebenden Gehäuses durch symmetrische Konstruktion des Gehäusekörpers vermieden wird, so dass ein gleichmäßiger Spalt entsteht. Eine Abdichtung ist jedoch nicht möglich.

Es wurde daher in der DE 198 48 440 A1 und der DE 10 2005 041 874 A1 vorgeschlagen, den durch die Schwindung erzeugten Spalt zwischen dem Klappenkörper und dem umgebenden Gehäuse einer im geschlossenen Zustand montagegespritzten Klappe durch einen nachträglich angespritzten Kappenrand zu füllen.

Entsprechend besteht bei den bekannten Ausführungen der Nachteil, dass zum Erreichen eines dichten Verschlusses des Kanals durch die Klappe immer ein zusätzlicher Verfahrensschritt notwendig ist. Des Weiteren muss diese zusätzliche Komponente, wenn sie angespritzt werden soll, wiederum einen geringeren Schmelzpunkt aufweisen als der Klappenkörper, was die thermische Belastbarkeit einer derartig hergestellten Klappe erneut senkt.

Des Weiteren ist aus der JP 2005-337198 A eine Klappenvorrichtung bekannt, bei der das Gehäuse unmittelbar stromabwärts des Klappenkörpers einen ringförmigen Kanal aufweist, der in stromabwärtiger Richtung offen ausgebildet ist. In diesen Kanal wird Luft unter Druck eingespeist, wodurch die Messung eines stromabwärtigen Drucksensors verbessert werden soll. Aussagen zur Herstellung oder Dichtigkeiten der Klappenvorrichtungen werden nicht gemacht.

Zusätzlich ist aus der WO 2005/070646 A1 ein Verfahren zur Herstellung einer Drosselklappenvorrichtung bekannt, bei dem zunächst das Gehäuse spritzgegossen wird und anschließend in dieses Gehäuse ein bewegliches Klappenteil eingespritzt wird. Um eine ausreichende Dichtigkeit zu erreichen, wird in den Spalt anschließend ein drittes Material eingebracht. Dieses Verfahren ist aufgrund der Vielzahl an Verfahrensschritten sehr aufwendig.

Es stellt sich daher die Aufgabe, ein Verfahren zum spaltlosen Montagespritzen zur Verfügung zu stellen, mit dem eine gute Abdichtung zwischen zwei Komponenten erzielbar ist. Entsprechend soll eine Klappenvorrichtung geschaffen werden, welche im Bereich eines Ventilsitzes eines montagegespritzten Klappenkörpers eine gute Dichtwirkung im geschlossenen Zustand der Klappe aufweist, ohne nach dem eigentlichen Spritzvorgang zusätzliche Verfahrensschritte durchführen zu müssen oder zusätzliche Anbauteile zu benötigen.

Diese Aufgabe wird durch ein verfahren mit den Merkmalen des Anspruchs 1 sowie eine Klappenvorrichtung mit den Merkmalen des Anspruchs 5 gelöst.

Dieses erfindungsgemäße Verfahren zeichnet sich entsprechend dadurch aus, dass zunächst eine erste, äußere Komponente gespritzt wird, anschließend ein Freiraum an der ersten, äußeren Komponente an der Rückseite einer Wand, gegen deren Vorderseite eine zweite Komponente gespritzt wird, ausgebildet wird und daraufhin die zweite Komponente unter Druck gegen die Wand gespritzt wird, wobei die Wand durch den Druck elastisch in Richtung des Freiraums verformt wird. Abschließen schrumpft die zweite Komponente durch Abkühlung, so dass die elastisch verformte Wand in Richtung zur zweiten Komponente zurückfedert. Durch dieses Rückfedern der zweiten Komponente im Bereich der Berührungsfläche zwischen den beiden Komponenten wird die Schrumpfung der zweiten Komponente ausgeglichen, wodurch eine gute Dichtwirkung zwischen den Komponenten erzielt wird.

Bezüglich der Klappenvorrichtung wird die Aufgabe dadurch gelöst, dass das Gehäuse und die Klappe gemäß dem Verfahren nach einem der vorhergehenden Ansprüche hergestellt sind, wobei die Klappe exzentrisch gelagert ist und die Ventilsitzfläche und eine Klappenumfangsfläche kreisabschnittsförmig ausgebildet sind, wobei der Radius der Klappenumfangsfläche größer ist als der Radius der Ventilsitzfläche. Hierdurch wird eine Linienberührung zwischen der Klappe und dem Ventilsitz erreicht, welche an dem axialen Ende der Klappe angeordnet ist, welche der Wand an der beim Spritzen weggebogenen Seite gegenüberliegt. Eine derartige Berührung führt zu einer guten Dichtwirkung bei geringen Stellkräften und verhindert ein Hängenbleiben der Klappe an der Kanalwand. Es wird eine sehr gute Dichtwirkung im Bereich der Ventilsitzfläche erzielt, während die Lagerstellen weiterhin einen Spalt zur eingespritzten Welle aufwelsen, so dass die Kappe gut drehbar ist. Dies wird ohne zusätzliche Verfahrensschritte oder Materialien beziehungsweise Bauteile erreicht.

Vorzugsweise erfolgt das Ausbilden des Freiraums im gleichen Verfahrensschritt wie das Spritzen der ersten Komponente. Hierzu ist lediglich eine entsprechende konstruktive Gestaltung und Auslegung der Spritzform notwendig. Zusätzliche Verfahrensschritte sind entsprechend nicht erforderlich.

In einer besonders bevorzugten Ausführungsform wird in den Freiraum von einem ersten axial offenen Ende ein Stützwerkzeug geschoben, gegen welches sich die Rückseite der Wand während des Einspritzens anlegt. Auf diese Weise wird eine Beschädigung der ersten Komponente durch den Druck beim Einspritzen vermieden. Es erfolgt stattdessen eine definierte Auslenkung der Wand, welche je nach Anwendung optimiert werden kann. Auch kann je nach Form des Stützwerkzeugs ein Zurückfedern der Wand auf bestimmte Bereiche begrenzt werden.

In einer besonderen Ausführungsform ist das Stützwerkzeug derart geformt, dass die Wand der ersten Komponente an dem offenen axialen Ende beim Einspritzen der zweiten Komponente um ca. 1-3° zu einer axialen Achse der ersten Komponente in den Freiraum gegen das Stützwerkzeug verformt wird. Somit füllt das Stützwerkzeug den Freiraum an der geschlossenen axialen Seite weitestgehend aus, während an der offenen Seite ein Freiraum verbleibt, der eine leichte Biegung der Wand zum Stützwerkzeug ermöglicht. Diese Ausführung führt zu einer etwa linienförmigen Anlage zwischen den beiden Komponenten am Ende des Herstell prozesses.

In einer Weiterbildung der Klappenvorrichtung wird der Freiraum ringförmig ausgebildet und konzentrisch zur Ventilsitzfläche im Gehäuse angeordnet, so dass eine Dichtwirkung zwischen den beiden Komponenten Klappenkörper und Gehäuse im Bereich der Ventilsitzfläche erzielt wird. So kann beispielsweise ein Ansaugkanal einer Verbrennungskraftmaschine mit einer derartig hergestellten Klappenvorrichtung vollständig verschlossen werden.

Dieser Freiraum weist vorteilhaft ein erstes axial offenes Ende auf, so dass ein Stützwerkzeug einfach eingeführt werden und somit eine definierte Anlagefläche erzeugt werden kann.

Es wird somit ein Verfahren zum spaltlosen Montagespritzen hergestellt, mit dem trotz des Schrumpfens der zweiten Komponente eine dichte Anlage der zweiten Komponente an der ersten Komponente sichergestellt werden kann, ohne zusätzliche Herstellschritte oder Komponenten verwenden zu müssen. Eine derartig hergestellte Klappenvorrichtung zeichnet sich durch ihre Leckagefreiheit im geschlossenen Zustand der Klappe aus. Das Verfahren und somit die Herstellung der Klappenvorrichtung sind einfach und kostengünstig durchzuführen.

Das erfindungsgemäß Verfahren wird im Folgenden am Beispiel einer erfindungsgemäßen Klappenvorrichtung anhand der nachfolgenden Figuren beschrieben.
Figur 1 zeigt eine Seitenansicht eines Gehäuses einer erfindungsgemäßen Klappenvorrichtung In geschnittener Darstellung.
Figur 2 zeigt eine Seitenansicht des Gehäuses nach dem Einspritzen der Klappe in geschnittener Darstellung.
Figur 3 zeigt einen Ausschnitt aus Figur 2, wobei in gestrichelten Linien die Formen des Gehäuses und der Klappe vor dem Abkühlen dargestellt sind.

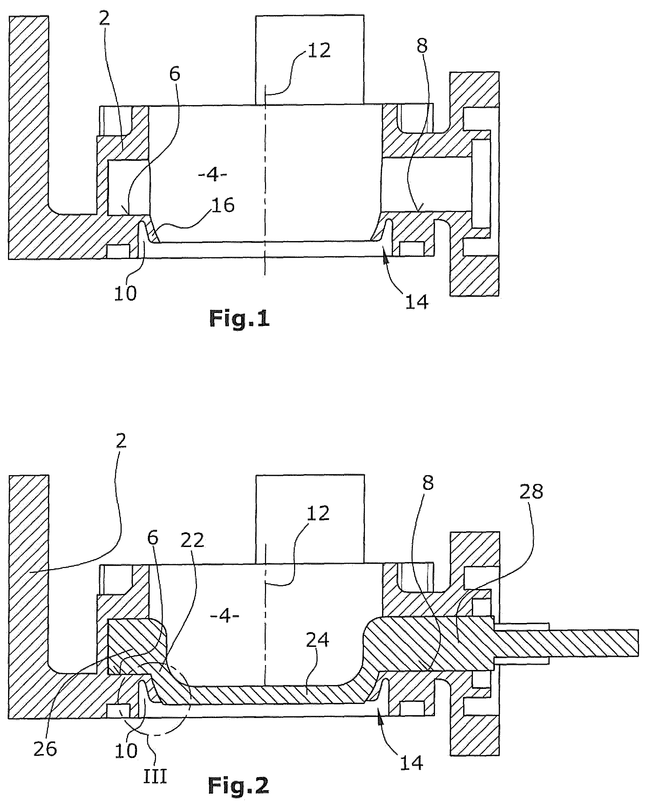

Die erfindungsgemäße Klappenvorrichtung besteht aus einer ersten Komponente in Form eines Gehäuses 2, in welchem ein im Querschnitt kreisförmiger Kanal 4 ausgebildet ist, der von einem Fluid axial durchströmbar ist, wie in Figur 1 dargestellt ist. Ein solches Gehäuse 2 wird beispielsweise durch Spritzguss in einer entsprechenden Form hergestellt.

Das Gehäuse 2 weist an radial gegenüberliegenden Seiten eine runde Sacköffnung 6 und eine Durchgangsöffnung 8 auf. Des Weiteren ist im Gehäuse 2 in einem definierten axialen Abschnitt ein ringförmiger Freiraum 10 ausgebildet, welcher konzentrisch zur Mittelachse 12 des Kanals angeordnet ist und dessen Innenumfang größer ist als der Außenumfang des Kanals 4, so dass dieser im Querschnitt vollständig vom Freiraum 10 umgeben ist. Dieser Freiraum 10 ist an seinem ersten axialen Ende 14 offen ausgebildet und an seinem gegenüberliegenden axialen Ende geschlossen.

Entsprechend ist zwischen dem Kanal 4 und dem Freiraum 10 eine ebenfalls ringförmige Wand 16 angeordnet, die sich in axialer Richtung erstreckt und deren radiale Vorderseite 18 zum Kanal 4 gerichtet ist und deren radiale Rückseite 20 zum Freiraum 10 weist. Dabei verengt die Wand 16 den Kanal 4 in Erstreckungsrichtung der Wand 16 also in Richtung ihrer offenen Seite 14, wobei die Vorderseite 18 der Wand kreisbogenförmig ist.

In Figur 2 ist die gesamte Klappenvorrichtung mit dem Gehäuse 2, in welches eine Klappe 22 eingespritzt ist, die eine zweite Komponente bildet, dargestellt.

Die Klappe 22 besteht aus einem Klappenkörper 24, an dessen Umfang an einer Seite ein Wellenstumpf 26 ausgebildet ist, der sich in die Sacköffnung 6 erstreckt und an dessen radial gegenüberliegender Seite eine Welle 28 ausgebildet ist, die durch die Durchgangsöffnung 8 im Gehäuse 2 ragt, so dass an der Welle 28 ein nicht dargestellter Aktor zur Drehung der Welle 28 mit dem Wellenstumpf 26 und somit des Kappenkörpers 24 befestigt werden kann. Die Durchgangsöffnung 8 und die Sacköffnung 6 dienen dabei als Lagerstellen für die Klappe 22.

Die durch die Welle 28 und den Wellenstumpf 26 festgelegte Drehachse der Klappe 22 ist exzentrisch zum Klappenkörper 24 angeordnet, dessen Klappenumfangsfläche 30 im den Kanal 4 verschließenden Zustand gegenüberliegend zu einer durch die Vorderseite 18 der Wand 16 gebildete Ventilsitzfläche 32 angeordnet ist.

Die Wand 16 und die Öffnungen 6, 8 dienen beim Einspritzvorgang der Klappe 22 als Formteile. Dies bedeutet, dass Kunststoff unter Druck gegen diese Oberflächen gespritzt wird. Dies hat zur Folge, dass erfindungsgemäß die Wand 16 beim Einspritzvorgang, wie durch die gestrichelten Linien verdeutlicht, an ihrem offenen axialen Ende 14 nach radial außen gebogen wird. Dies hat zur Folge, dass der entstehende Klappenkörper 24 eine Klappenumfangsfläche 30 erhält, die zunächst dieser gebogenen Form der Vorderseite 18 der Wand 16 entspricht, im vorliegenden Fall also eine Kugelschnittform mit einem Radius aufweist, welcher im Vergleich zum Radius der Vorderseite 18 der Wand 16 im nicht gebogenen Zustand geringfügig größer ist.

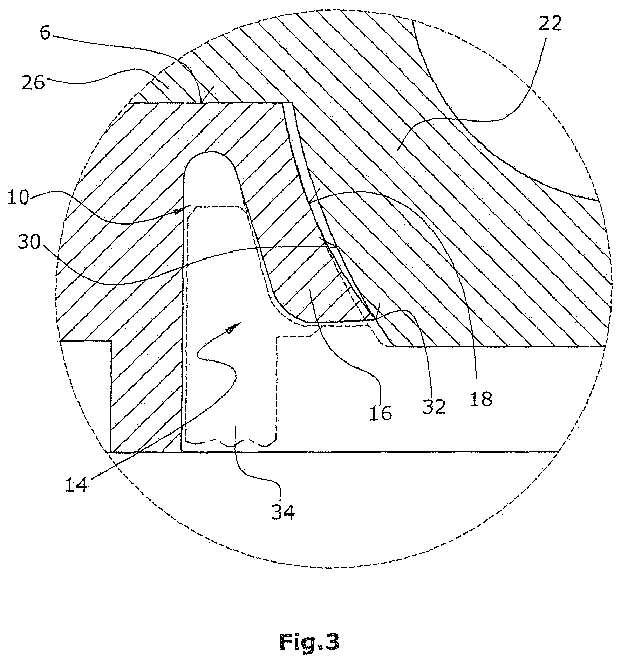

Damit diese Biegung der Wand 16 in einem definierten Maß stattfindet, wird vor dem Gießen der Klappe 22 in den Freiraum 10 ein Stützwerkzeug 34 eingeführt, welches im vorliegenden Ausführungsbeispiel eine zur Rückseite 20 der Wand 16 gerichtete Oberfläche 36 aufweist, die zur Mittelachse 12 des Gehäuses 2 um 1° weniger geneigt ist als die Rückseite 20 der Wand 16. Dies führt dazu, dass beim Einspritzvorgang der Klappe durch den Einspritzdruck die Wand um 1° gedreht gegen die Oberfläche 34 des Stützwerkzeugs gedrückt wird, wie in Figur 3 zu erkennen ist.

Nach dem Einspritzen wird die Klappe 22 abgekühlt, wodurch eine Schrumpfung einsetzt. Diese hat zur Folge, dass im Bereich der Lagerstellen 6, 8 ein geringfügiger Abstand zwischen der Welle 28 und der Durchgangsöffnung 8 sowie dem Wellenstumpf 26 und der Sacköffnung 6 entsteht. Gleichzeitig schrumpft auch der Klappenumfang, wobei die Kreisabschnittsform der Klappenumfangsfläche 30 im Wesentlichen unverändert bleibt und lediglich der Radius des Klappenkörpers 24 schrumpft. Dieses Schrumpfen führt dazu, dass die Wand 16 wieder gegen die Klappenumfangsfläche 30 in ihre Ursprungsstellung zurückfedern kann. Entsprechend ist die Verformung der Wand 16 beim Einspritzen dem Maß der Schrumpfung des Kappenkörpers 24 anzupassen.

Der Radius der Ventilsitzfläche 32 ist nach dem Zurückfedern wiederum etwas kleiner als während des Einspritzvorgangs und entsprechend auch kleiner als der Radius der Klappenumfangsfläche 30, so dass lediglich eine Linienberührung im von der Welle 28 abgewandten Bereich des Klappenkörpers 24 folgt. Dadurch entsteht eine spielfreie Abdichtung bei gleichzeitig guter Beweglichkeit der Klappe 22.

Diese dichtende Wirkung in der geschlossenen Stellung der Klappe 22 wird ohne zusätzliche Verfahrensschritte sichergestellt. Entsprechend fallen weder zusätzliche Montage- noch Materialkosten an. Entsprechend sind durch dieses Verfahren hohe Freiheitsgrade bei der Konstruktion montagegespritzter Bauteile gegeben, da erstmalig in diesem Prozess sowohl abdichtende als auch spielbehaftete Passungen zwischen den Komponenten hergestellt werden können.

Es sollte deutlich sein, dass sich dieses Verfahren nicht nur für die Anwendung an Klappen in Verbrennungskraftmaschinen eignet, sondern überall dort geeignet ist, wo die Komponenten montagegespritzter Bauteile spielfrei zueinander angeordnet werden sollen. Entsprechend ist der Schutzbereich nicht auf das beschriebene Ausführungsbeispiel beschränkt. Auch die Klappenvorrichtung kann innerhalb des Schutzbereiches konstruktiv im Vergleich zum Ausführungsbeispiel verändert werden.

## Patentansprüche

1. Verfahren zum spaltlosen Montagespritzen zweier Komponenten mit folgenden Schritten:
- Spritzen einer ersten, äußeren Komponente (2)
- Ausbilden eines Freiraums (10) an der ersten, äußeren Komponente (2) an der Rückseite (20) einer Wand (16), gegen deren Vorderseite (18) eine zweite Komponente (22) gespritzt wird,
- Spritzen der zweiten Komponente (22) unter Druck gegen die Wand (16), wobei die Wand (16) durch den Druck elastisch in Richtung des Freiraums (10) verformt wird,
- Schrumpfen der zwelten Komponente (22) durch Abkühlung,
- Rückfedern der elastisch verformten Wand (16) in Richtung zur zweiten Komponente (22).

2. Verfahren zum spaltlosen Montagespritzen zweier Komponenten nach Anspruch 1,
**dadurch gekennzeichnet, dass**
das Ausbilden des Freiraums (10) im gleichen Verfahrensschritt wie das Spritzen der ersten Komponente (2) erfolgt.

3. Verfahren zum spaltlosen Montagespritzen zweier Komponenten nach einem der Ansprüche 1 oder 2,
**dadurch gekennzeichnet, dass**
in den Freiraum (10) von einem ersten axial offenen Ende (14) ein Stützwerkzeug (34) geschoben wird, gegen welches sich die Rückseite (20) der Wand (16) während des Einspritzens anlegt.

4. Verfahren zum spaltlosen Montagespritzen zweier Komponenten nach Anspruch 3,
**dadurch gekennzeichnet, dass**
das Stützwerkzeug (34) derart geformt ist, dass die Wand (16) an dem offenen axialen Ende (14) der ersten Komponente (2) beim Einspritzen der zweiten Komponente (22) um ca. 1-3° zu einer axialen Achse (12) der ersten Komponente (2) in den Freiraum (10) gegen das Stützwerkzeug (34) verformt wird.

5. Klappenvorrichtung für eine Verbrennungskraftmaschine mit einer ersten Komponente, welche als Kanal (4) bildendes Gehäuse (2) dient, in welcher eine als zweite Komponente dienende Klappe (22) drehbar gelagert ist, wobei das Gehäuse (2) eine Ventilsitzfläche (32) aufweist, die durch eine Vorderseite (18) einer Wand (16) gebildet ist, an deren Rückseite (20) ein Freiraum (10) ausgebildet ist und gegen die die Klappe (22) im den Kanal (4) verschließenden Zustand anliegt,
wobei das Gehäuse und die Klappe gemäß dem Verfahren nach einem der vorhergehenden Ansprüche hergestellt sind, wobei die Klappe (22) exzentrisch gelagert ist und die ventilsitzfläche (32) und eine Klappenumfangsfläche (30) kreisabschnittsförmig ausgebindet sind, wobei der Radius der Klappenumfangsfläche (30) größer ist als der Radius der Ventilsitzfläche (32).

6. Klappenvorrichtung für eine Verbrennungskraftmaschine nach Anspruch 5,
wobei der Freiraum (10) ringförmig ausgebildet und konzentrisch zur Ventilsitzfläche (32) im Gehäuse (2) angeordnet wird.

7. Klappenvorrichtung für eine Verbrennungskraftmaschine nach Anspruch 6,
wobei der Freiraum (10) ein erstes axial offenes Ende (14) aufweist.

## Claims

1. Method for the gapless assembly injection molding of two components, comprising the following steps:
- injection molding a first, outer component (2),
- forming a free space (10) at the first, outer component (2) on the rear side (20) of a wall (16), a second component (22) being injection molded against the front side (18) thereof,
- injection molding the second component (22) under pressure against the wall (16), the wall (16) being elastically deformed towards the free space (10) by the pressure,
- shrinking the second component (22) by cooling,
- causing the elastically deformed wall (16) to spring back towards the second component (22).

2. Method for the gapless assembly injection molding of two components of claim 1, **characterized in that** the free space (10) is formed in the same method step in which the first component (2) is injection molded.

3. Method for the gapless assembly injection molding of two components of one of claims 1 or 2, **characterized in that** a supporting tool (34) is inserted into the free space (10) from a first axially open end (14), the rear side (20) of the wall (16) resting against said tool during injection.

4. Method for the gapless assembly injection molding of two components of claim 3, **characterized in that** the supporting tool (34) is formed such that, as the second component (22) is injected, the wall (16) at the open axial end (14) of the first component (2) is deformed into the free space (10) and against the supporting tool (34) by about 1-3° with respect to an axial axis (12) of the first component (2).

5. Flap device for an internal combustion engine comprising a first component serving as a housing (2) forming a duct (4), in which first component a flap (22), serving as a second component, is rotatably supported, the housing (2) having a valve seat surface (32) formed by a front side (18) of a wall (16), on the rear side (20) of which a free space (0) is formed and against which the flap (22) abuts in its state of closing the duct (4), wherein the housing and the flap are manufactured according to the method of one of the preceding claims, the flap (22) being supported eccentrically, and the valve seat surface (32) and a peripheral surface (30) of the flap being formed as segments of a circle, the radius of the peripheral surface (30) of the flap being larger than the radius of the valve seat surface (32).

6. Flap device for an internal combustion engine of claim 5, wherein the free space (10) is annular in shape and is arranged in the housing (2) such that it is concentric with respect to the valve seat surface (2).

7. Flap device for an internal combustion engine of claim 6, wherein the free space (10) has a first axially open end (14).

## Revendications

1. Procédé d'assemblage par moulage par injection, sans fente, de deux éléments, le procédé comprenant les étapes suivantes:
- moulage par injection d'un premier élément (2) extérieur,
- formage d'un espace libre (10) au premier élément (2) extérieur sur la face arrière (20) d'une paroi (16), un deuxième élément (22) étant moulé par injection contre la face frontale (18) de la paroi,
- moulage par injection du deuxième élément (22), sous pression, contre la paroi (16), la pression déformant ladite paroi (16) élastiquement vers ledit espace libre (10),
- rétraction du deuxième élément (22) par refroidissement,
- faire rebondir la paroi (16) déformée élastiquement vers le deuxième élément (22).

2. Procédé d'assemblage par moulage par injection, sans fente, de deux éléments selon la revendication 1, **caractérisé en ce que** le formage de l'espace libre (10) est effectuée pendant la même étape du procédé que le moulage par injection du premier élément (2).

3. Procédé d'assemblage par moulage par injection, sans fente, de deux éléments selon la revendication 1 ou 2, **caractérisé en ce qu'**un outil de support (34) est introduit dans ledit espace libre (10) à partir d'une première extrémité (14) axialement ouverte, la face arrière (20) de la paroi (16) s'appliquant contre ledit outil lors de l'injection.

4. Procédé d'assemblage par moulage par injection, sans fente, de deux éléments selon la revendication 3, **caractérisé en ce que** l'outil de support (34) est formé de sorte que, lors de l'injection du deuxième élément (22), la paroi (16) à l'extrémité (14) axialement ouverte du premier élément (2) est déformée dans l'espace libre (10) et contre l'outil de support (34) par environ 1-3° par rapport à un axe axiale (12) du premier élément (2).

5. Dispositif de clapet destiné à un moteur à combustion interne, avec un premier élément faisant office de carter (2) formant un canal (4), dans lequel élément un clapet (22), faisant office de deuxième élément, est supporté de manière rotative, le carter (2) comprenant une surface de siège de clapet (32) formée par une face frontale (18) d'une paroi (16) sur la face arrière (20) de laquelle est formé un espace libre (10) et contre laquelle s'applique le clapet (22) en son état de fermeture du canal (4), le carter et le clapet étant fabriqué selon le procédé selon l'une quelconque des revendications précédentes, ledit clapet (22) étant supporté excentriquement, et la surface de siège de clapet (32) et une surface périphérique (30) du clapet étant réalisées en forme de segment de cercle, le rayon de la surface périphérique (30) du clapet étant plus grand que le rayon de la surface de siège de clapet (32).

6. Dispositif de clapet destiné à un moteur à combustion interne selon la revendication 5, dans lequel l'espace libre (10) est en forme annulaire et est disposé dans le carter (2) de manière concentrique par rapport à la surface de siège de clapet (32).

7. Dispositif de clapet destiné à un moteur à combustion interne selon la revendication 6, dans lequel l'espace libre (10) comprend une première extrémité (14) axialement ouverte.
